# FASCICULE DE BREVET EUROPEEN

(11) **EP 2 822 746 B1**
(45) Date de publication et mention de la délivrance du brevet: **17.02.2016**
(21) Numéro de dépôt: 13707399.5
(22) Date de dépôt: 05.03.2013
(51) Int. Cl.: B29C 43/18, B60R 13/02, B32B 3/12, B29K 601/00, B29K 309/02, B29K 67/00, B32B 5/02, B32B 27/10, B32B 27/12, B32B 27/36, B32B 29/00

(54) **PROCÉDÉ DE FABRICATION D'UNE PIÈCE D'ÉQUIPEMENT DE VÉHICULE AUTOMOBILE ET PIÈCE D'ÉQUIPEMENT ASSOCIÉE**
VERFAHREN ZUR HERSTELLUNG EINES KRAFTFAHRZEUGAUSSTATTUNGSTEILS UND ENTSPRECHENDES AUSSTATTUNGSTEIL
METHOD OF MANUFACTURING A PIECE OF AUTOMOTIVE VEHICLE EQUIPMENT AND ASSOCIATED PIECE OF EQUIPMENT

(30) Priorité: 09.03.2012 FR 1252147
(43) Date de publication de la demande: 14.01.2015
(73) Titulaire: Faurecia Automotive Industrie, 92000 Nanterre (FR)
(72) Inventeur: JEUNESSE, Stève, F-08210 Mouzon (FR); MARCEL, Valérie, F-55150 Brandeville (FR)
(74) Mandataire: Blot, Philippe Robert Emile
(86) Numéro de dépôt international: PCT/EP2013/054409
(87) Numéro de publication internationale: WO 2013/131917

(56) Documents cités:
- FR-A1- 2 860 450
- FR-A1- 2 933 894
- US-A- 4 933 131
- US-A1- 2003 003 267
- US-A1- 2005 224 637
- DATABASE WPI Week 200779 1 novembre 2007 (2007-11-01) Thomson Scientific, London, GB; AN 2007-853233 XP002686954, -& JP 2007 283680 A (INOAC CORP KK) 1 novembre 2007 (2007-11-01)

## Description

La présente invention concerne un procédé de fabrication d'une pièce d'équipement de véhicule automobile, comprenant les étapes suivantes :
- fourniture d'une nappe de base comportant des fibres en céramique et des fibres de polymère thermofusible ;
- chauffage et compression de la nappe de base sur au moins une paroi de support pour faire fondre les fibres de polymère thermofusible et pour faire adhérer le polymère fondu aux fibres de céramique afin d'obtenir une nappe pré-formée ;
- confinement de la nappe pré-formée dans un moule sous pression pour constituer une nappe formée, le polymère de la nappe formée étant avantageusement au moins en partie cristallisé.

La pièce est destinée à constituer une pièce structurante dans un véhicule automobile, telle qu'une tablette, un faux-plancher.

Une pièce connue comprend un corps composite comportant une nappe de fibres de céramique, par exemple de fibres de verre, les fibres de céramique étant noyées dans une matrice en polymère thermoplastique, tel que du polypropylène.

Ce type de matériau est désigné par le terme commercial « Sommold ».

Pour réaliser facilement ces pièces, il est connu d'utiliser un procédé du type précité. Dans ce procédé, un mat de base comprenant un mélange de fibres de céramique et de fibres de polypropylène est préalablement découpé au format de la pièce souhaitée.

Puis, le mat est introduit entre deux plateaux chauffés qui transmettent les calories par conduction et par convection de l'air emprisonné dans le mat. Ceci permet de chauffer rapidement et facilement le mat de base pour provoquer la fusion des fibres de polypropylène. Ensuite, la nappe formée avec le polymère en fusion est transférée dans un moule froid qui se referme et comprime cette nappe jusqu'à l'épaisseur requise. Le polypropylène flue à travers les fibres de verre et forme, après refroidissement, la matrice polymère du corps composite qui présente l'épaisseur souhaitée, et la forme voulue. L'étape de chauffe avant introduction dans le moule simplifie le fonctionnement du moule qui n'a pas à être régulé thermiquement et réduit le temps de cycle, l'opération de préchauffage étant réalisée en temps masquée pendant l'opération de moulage en elle-même.

Le corps composite ainsi réalisé peut être utilisé tel quel, être assemblé avec un corps composite de même nature et former des pièces « doubles coques » ou encore être assemblé sur un écarteur en nid d'abeille pour réaliser une pièce composite de type sandwich. Ces pièces reçoivent dans la majorité des cas un parement le plus souvent de type moquette, touffetée ou aiguilletée.

En général, la proportion massique de fibres de verre et de fibres de polypropylène dans le mat de base est de l'ordre de 50%.

Les pièces obtenues par ce procédé ne donnent pas toujours entière satisfaction. Dans certaines applications, le cahier des charges de la pièce implique notamment une tenue en température élevée, se traduisant par des flèches sous charges très faibles, notamment à des températures supérieures à 85°C. Ceci est le cas par exemple pour des tablettes arrière de véhicule automobile qui sont soumises à des températures de cet ordre lorsque le véhicule reste exposé au soleil pendant une longue période de temps.

Un autre inconvénient des pièces en Sommold réside dans le fait que la technique de fabrication du mat amène un certain nombre de fibres de verre à se trouver orientées perpendiculairement au plan du mat. Ces fibres de verre mal orientées se retrouvent même après moulage au sein de la pièce terminée et peuvent percer le parement occasionnant ainsi des irritations pour les opérateurs et éventuellement pour les utilisateurs finaux.

Pour pallier ce problème de comportement à température élevée des composites à base de fibres de céramique, il est connu d'utiliser, à la place des fibres de polyoléfine, un polymère thermodur apte à réticuler pour créer des pontages tridimensionnels entre les chaînes macromoléculaires. Les polymères thermodurs présentent en général des modules d'élasticité élevés, et un bon comportement à haute température, avec un fluage faible. Ils sont cependant difficiles à recycler et la conformation de la matrice en polymère thermodur peut être compliquée à mettre en oeuvre industriellement du fait essentiellement de la durée de la réticulation qui induit un temps de cycle élevé.

Une famille de polymère thermodur très souvent associée aux fibres de céramiques et la famille des polyesters insaturés. Ainsi le terme GRP (Glass-fiber Reinforecd Plastic) fait dans la majorité des cas référence à des composite à base de fibres de verre renforcées par des résines polyester insaturées thermodures. Les GRP sont de longue date utilisés comme peaux dans des structures sandwich tel que décrit dans FR 2 580 991.

EP 0 628 406 propose d'utiliser différents types de résine thermodure pour réaliser des peaux d'une pièce structurantes de type sandwich. De plus il est proposé de réaliser l'adhésion avec l'écarteur par une résine qui s'expanse sous forme de mousse pour pénétrer partiellement dans l'écarteur ce qui permet de renforcer ce dernier et d'assurer une bonne adhérence avec les peaux.

Alternativement, EP-2 311 629 décrit une pièce structurante de véhicule automobile comportant un écarteur central et deux corps en polymère fixés de part et d'autre de l'écarteur central. Chaque corps est obtenu à base de fibres bicomposantes en polyéthylène térephtalate. Dans ce cas la matrice de même que les fibres de renfort sont formés par un polyester saturé thermoplastique tandis que l'écarteur en nid d'abeille est également à base de polyester thermoplastique. Du fait que l'écarteur et les peaux sont de même nature chimique leur adhésion peut être forte ce qui contribue à améliorer le comportement en flexion. Ce produit est aisément recyclable car à base d'un seul type de polymère.

Néanmoins, le procédé de mise en oeuvre de ces pièces passe par une étape de nappage qui requiert un équipement spécifique et nécessite l'extrusion de fibres bicomposantes ce qui reste un procédé onéreux. Par ailleurs le module d'élasticité des fibres de polyester téréphtalate utilisées comme renfort reste largement inférieur à celui du verre conduisant à des composites de moindres performances.

Le document FR-A-2 860 450 décrit un procédé de fabrication d'une pièce d'équipement de véhicule automobile comprenant une étape de chauffage et compression d' une nappe de base être deux feuilles du matériau, la nappe de base comportant des fibres en céramique et des fibre de polymère thermofusible comme défini dans la première partie de la revendication 1.

Un but de l'invention est d'obtenir un procédé de réalisation de pièces structurelles de véhicule automobile qui présentent des propriétés mécaniques améliorées, le procédé étant simple à mettre en oeuvre et peu onéreux. Un autre but de l'invention est d'obtenir un procédé conduisant à des pièces recyclables et dont la surface sera totalement exempte de fibres irritantes.

En particulier lorsque ces pièces structurelles sont réalisées par l'association de deux corps composites placés de part et d'autre d'un écarteur, ces performances améliorées seront obtenues grâce aux bonnes caractéristiques des corps composites en eux-mêmes ainsi qu'à la qualité de l'interface corps composite / écarteur.

A cet effet, l'invention a pour objet un procédé du type précité, caractérisé en ce que le procédé comporte la disposition d'une première feuille de matériau poreux sur une première face de la nappe de base et d'une deuxième feuille de matériau poreux sur une deuxième face de la nappe de base avant l'étape de chauffage, chaque feuille de matériau poreux présentant une épaisseur inférieure à celle de la nappe formée, les feuilles de matériau poreux confinant entre elles le matériau polymère fondu issu des fibres de polymère thermofusible lors de l'étape de chauffage, les feuilles de matériau poreux étant liées à la nappe formée après l'étape de constitution de la nappe formée, pour constituer un premier corps composite.

Le procédé selon l'invention peut comprendre l'une ou plusieurs des caractéristiques suivantes, prise(s) isolément ou suivant toutes combinaisons techniquement possibles :
- le polymère thermofusible comporte un indice de fluage supérieur à 20 g/10 mn à 260°C et notamment compris entre 30 g/10mn et 60 g/10mn ;
- chaque feuille de matériau poreux présente une masse surfacique inférieure à 100 g/m², avantageusement inférieure à 85 g/m², notamment inférieure à 60 g/m² ;

- la première feuille de matériau poreux et de la deuxième feuille de matériau poreux est formée de papier ou d'un voile plan de fibres liées mécaniquement ou par une résine ;
- la tension de surface de la première feuille et/ou de la deuxième feuille est inférieure à 60 dynes/cm, et est notamment comprise entre 40 dynes/cm et 60 dynes/cm ;
- la mouillabilité de la première feuille et/ou de la deuxième feuille, mesurée par son indice COBB 60 déterminé selon la norme ISO 535, est comprise entre 50% et 100%, avantageusement entre 80% et 100% de la masse surfacique de ladite feuille ;
- la résistance au passage de l'air de la première feuille et/ou de la deuxième feuille est supérieure à 25 N.s/m³ et est notamment comprise entre 25 N.s/m³ et 100 N.s/m³ ;
- la première feuille est réalisée à base de papier, la deuxième feuille étant réalisée à base d'un voile plan de fibres liées mécaniquement ou par une résine, avantageusement d'un voile de matériau céramique ;
- les fibres de polymère thermofusible sont avantageusement des fibres contenant du polyester, en particulier des fibres contenant du polyéthylène téréphtalate ;
- après l'étape de chauffage, l'épaisseur maximale de pénétration du polymère fondu dans chaque feuille de matériau poreux est inférieure à 90 % de l'épaisseur de la feuille de matériau poreux et est avantageusement comprise entre 50 % et 90 % de l'épaisseur de la feuille ;
- il comporte la réalisation d'un deuxième corps composite, avantageusement par les mêmes étapes que celles utilisées pour réaliser le premier corps composite,
   le procédé comportant la fixation du premier corps composite et du deuxième corps composite sur deux faces opposées d'un écarteur intermédiaire, avantageusement un écarteur intermédiaire en matière fibreuse ;
- lors de l'étape de chauffage, la température de chauffage de la nappe de base est supérieure à 140 °C, et est notamment supérieure à 200°C ;
- il comprend, après l'étape de chauffage, une étape de déplacement de la nappe formée dans un moule avantageusement régulé à température constante, l'étape de conformation étant effectuée dans ce moule ;
- la compression de la nappe de base est effectuée entre deux parois de support en regard délimitant entre elles un espace intermédiaire ;
- la pièce comporte un premier corps composite ;
- la pièce est obtenue à partir d'un premier corps composite.

L'invention a également pour objet une pièce d'équipement de véhicule automobile, caractérisée en ce qu' elle comporte au moins un corps composite comportant une nappe formée de fibres de céramique liées entre elles par une matrice en polymère avantageusement au moins en partie cristallisé, obtenue à partir de fibres de polymère thermofusible, le corps composite comprenant une première feuille de matériau poreux disposé sur une première face de la nappe formée et une deuxième feuille de matériau poreux disposée sur une deuxième face de la nappe formée, chaque feuille de matériau poreux présentant une épaisseur inférieure à celle de la nappe formée, la matrice en matériau polymère étant confinée entre les feuilles de matériau poreux, chaque feuille de matériau poreux étant liée à la nappe formée.

La pièce selon l'invention peut comprendre l'une ou plusieurs des caractéristiques suivantes, prises isolément ou suivant toutes combinaisons techniquement possibles :
- chaque feuille de matériau poreux présente une masse surfacique inférieure à 100 g/m², avantageusement inférieure à 85 g/m², notamment inférieure à 60 g/m² ;
- chaque feuille de matériau poreux est choisie parmi une feuille de papier, et un voile plan de fibres liées mécaniquement ou par une résine ;
- le polymère thermofusible comporte un indice de fluage à 260 °C supérieur à 20 g/10mn et avantageusement compris entre 30 g/10mn et 60 g/10mn ;
- la matrice obtenue à partir de fibres de polymère thermofusible contient du polyester, notamment du polyéthylène téréphtalate ;
- elle comporte un premier corps composite et un deuxième corps composite, chaque corps composite comportant une nappe formée comprenant des fibres de céramique liées entre elles par une matrice en matériau polymère avantageusement au moins en partie cristallisé obtenue à partir de fibres de polymère thermofusible, chaque corps composite comprenant une première feuille de matériau poreux fixée sur une première face de la nappe formée et une deuxième feuille de matériau poreux fixée sur une deuxième face de la nappe formée, chaque feuille de matériau poreux présentant une épaisseur inférieure à celle de la nappe formée, la matrice en matériau polymère étant confinée entre les feuilles de matériau poreux, chaque feuille de matériau poreux étant liée à la nappe formée,
   le premier corps composite et le deuxième corps composite étant fixés sur un écarteur, notamment un écarteur en matériau fibreux tel qu'un écarteur en carton ;
- la tension de surface de la première feuille et/ou de la deuxième feuille est inférieure à 60 dynes/cm, et est notamment comprise entre 40 dynes/cm et 60 dynes/cm ;
- la mouillabilité de la première feuille et/ou de la deuxième feuille, mesurée par son indice COBB 60 déterminé selon la norme ISO 535, est comprise entre 50% et 100%, avantageusement entre 80% et 100% de la masse surfacique de ladite feuille ;
- la résistance au passage de l'air de la première feuille et/ou de la deuxième feuille est supérieure à 25 N.s/m³ et est notamment comprise entre 25 N.s/m³ et 100 N.s/m³ ;
- la première feuille est réalisée à base de papier, la deuxième feuille étant réalisée à base d'un voile plan de fibres liées mécaniquement ou par une résine, avantageusement d'un voile de matériau céramique ;
- les fibres de polymère thermofusible sont avantageusement des fibres contenant du polyester, en particulier des fibres contenant du polyéthylène téréphtalate ;
- l'épaisseur maximale de pénétration du polymère de la matrice dans chaque feuille de matériau poreux est inférieure à 90 % de l'épaisseur de la feuille de matériau poreux et est avantageusement comprise entre 50 % et 90 % de l'épaisseur de la feuille.

L'invention sera mieux comprise à la lecture de la description qui va suivre, donnée uniquement à titre d'exemple, et faite en se référant aux dessins annexés, sur lesquels :
- la figure 1 est une vue de dessus d'une première pièce d'équipement de véhicule automobile réalisée par un premier procédé selon l'invention ;
- la figure 2 est une vue en coupe partielle de la pièce de la figure 1 ;
- la figure 3 est une vue d'une unité de chauffage d'un ensemble de fabrication de la pièce de la figure 1.
- la figure 4 est une vue analogue à la figure 3, d'une unité de moulage de l'ensemble de fabrication ;
- les figures 5 à 9 illustrent différentes étapes successives du procédé de fabrication de la pièce selon l'invention ; et
- la figure 10 illustre une deuxième pièce réalisée par un procédé selon l'invention.
- la figure 11 illustre le comportement en flexion à 85 °C d'une pièce en Sommold classique en comparaison d'une pièce réalisée dans le cadre de l'invention

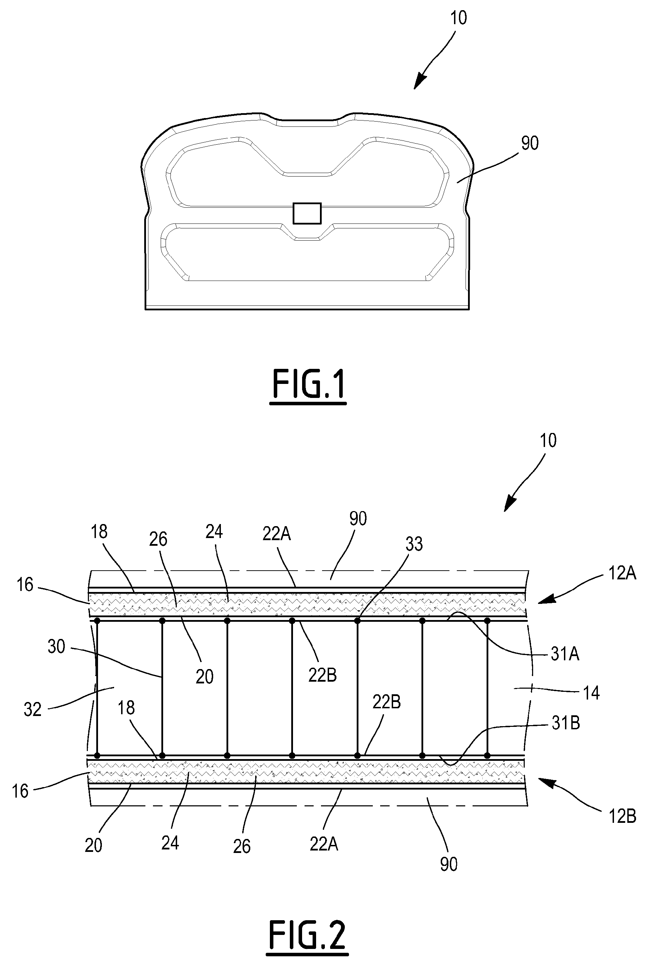

Une première pièce 10 d'équipement de véhicule automobile réalisée par un procédé selon l'invention est illustrée par la figure 1.

La pièce 10 est avantageusement une pièce structurante du véhicule automobile, par exemple une tablette, telle qu'une tablette arrière de masquage de coffre, un faux plancher d'habitacle ou de coffre, ou un sous-moteur.

En référence à la Figure 2, la pièce 10 comporte au moins un premier corps composite 12A, 12B obtenu par le procédé selon l'invention.

Dans l'exemple représenté sur la figure 1 et sur la figure 2, la pièce 10 comporte un premier corps composite 12A, un deuxième corps composite 12B et un écarteur intermédiaire 14. Les corps composites 12A, 12B sont fixés sur des faces opposées de l'écarteur intermédiaire 14.

Comme illustré par la figure 2, chaque corps composite 12A, 12B comprend une nappe centrale composite 16 présentant une première face 18 et une deuxième face 20.

Dans l'exemple représenté sur la figure 2, le corps 12A, 12B comporte une première feuille 22A fixée sur la première face 18 de la nappe centrale 16 et une deuxième feuille 22B fixée sur la deuxième face 20 de la nappe centrale 16.

Chaque corps composite 12A, 12B présente une épaisseur inférieure à celle de l'écarteur 14. Plus généralement, l'épaisseur de chaque corps composite 12A, 12B est inférieure à 3 mm et notamment comprise entre 0,6 mm et 2 mm.

La masse surfacique de chaque corps composite 12A, 12B est inférieure à 3000 g/m². Elle est notamment comprise entre 600 g/m² et 1800 g/m².

La masse volumique de chaque corps composite 12A, 12B est inférieure à 1900 kg/m³, et est notamment comprise entre 500 kg/m³ et 1500 kg/m³.

Comme on le verra plus bas, la nappe centrale 16 comporte une pluralité de fibres de céramique 24 et une matrice en polymère 26 liant les fibres céramique 24 entre elles.

Les fibres céramiques 24 sont par exemple des fibres de verre.

Elles présentent avantageusement un titre compris entre 1 dtex et 20 dtex. Les fibres de céramique présentent une longueur moyenne inférieure à 150 mm et un diamètre inférieur à 50 micromètres.

La matrice en polymère est réalisée à partir de fibres d'un polymère thermofusible.

Le polymère thermofusible présente avantageusement une température de transition vitreuse, mesurée par DSC (« Diffferential Scanning Calorimetry » ou Calorimétrie Différentielle à Balayage) selon la Norme ISO 11357-2, supérieure à 60°C, et notamment comprise entre 75°C et 85°C. Il présente une température de fusion notamment supérieure à 200°C, par exemple comprise entre 240°C et 260°C.

Le polymère thermofusible est avantageusement semi-cristallin. Il présente un taux de cristallinité supérieur à 20%, notamment compris entre 30% et 50%. Le polymère thermofusible présente une température de cristallisation, mesurée par la Norme ISO 11357-1 avantageusement supérieure à 100°C, et notamment comprise entre 140°C et 160°C.

La matrice en polymère 26 est avantageusement réalisée à base d'un polyester saturé thermoplastique, différent d'un polyester insaturé thermodur. Dans un exemple, le polyester saturé est un polyéthylène téréphtalate (PET) obtenu par polycondensation de l'acide téréphtalique avec l'éthylène glycol. Le polyéthylène téréphtalate est par exemple modifié avec du glycol. En variante, le polyester est un polybuthylène téréphtalate (PBT) formé par polycondensation de l'acide téréphtalique et du butane-2, 3-diol.

Ainsi le polymère formant la matrice présente un indice de fluage (melt flow index ou MFI) à 260°C avec une charge nominale de 0,325kg, tel que mesuré par la Norme ISO 1133:2005 Méthode A, supérieur à 20g/10mn, et notamment compris entre 20g/10mn et 60g/10mn, avantageusement entre 30g/10mn et 60g/10mn.

Avantageusement, la nappe centrale 16 est obtenue à partir d'une nappe de base comprenant un mélange de fibres céramiques et de fibres de polymère thermofusible. Les fibres de céramique sont dispersées dans les fibres de polymère thermofusible.

La proportion massique de polymère thermofusible dans la nappe 16 est comprise entre 30% et 70% en masse et la proportion massique des fibres de céramique 24 dans la nappe 16 est comprise entre 70% et 30% en masse. Ces pourcentages sont calculés par rapport à la masse totale des fibres de céramique 24 et de la matrice en polymère thermofusible 26.

Initialement, le titre des fibres de polymère est par exemple supérieur à 1 dtex et est compris entre 3,3 dtex et 6,7 dtex. La longueur moyenne des fibres de polymère est avantageusement inférieure à 150 mm et est notamment comprise entre 40 mm et 90 mm. Le diamètre moyen des fibres de polymère est par exemple compris entre 30 et 60 micromètres.

La nappe de base est fabriquée avantageusement par un procédé de type de dispersion à l'air ou « airlay », qui présente l'avantage de traiter aisément des mélanges de fibres de toutes natures et est renforcée par aiguilletage.

Chaque feuille de matériau poreux 22A, 22B présente une épaisseur inférieure à celle de la nappe centrale 16. Avantageusement, l'épaisseur de chaque feuille 22A, 22B est très inférieure à celle de la nappe centrale 16 et est par exemple inférieure à 5% de l'épaisseur maximale de la nappe centrale 16.

Chaque feuille 22A, 22B présente une masse surfacique inférieure à 100 g/m², notamment inférieure à 80 g/m², avantageusement inférieure à 60 g/m².

Chaque feuille 22A, 22B est poreuse. Elle présente ainsi une pluralité d'ouvertures qui déterminent sa mouillabilité par capillarité. La mouillabilité de chaque feuille 22A, 22B dépend de la tension de surface critique des fibres qui la constituent, de la dimension moyenne des pores entre ces fibres et de la pression exercée entre les plateaux chauds lors de la pré-formation de chaque corps composite 12A, 12B. En ajustant ces trois paramètres au regard du MFI et de la tension de surface du polymère en fusion, la pénétration du polymère à l'intérieur du matériau constitutif des feuilles 22A, 22B, sous une pression ajustée est contrôlée.

Dans les corps 12A, 12B selon l'invention, le polymère formant la matrice pénètre le plus possible, au moins sur la moitié de l'épaisseur des feuilles 22A, 22B, mais sans les traverser. Ainsi, les feuilles 22A, 22B assurent une continuité avec la matrice des corps composites 12A, 12B et présentent des propriétés mécaniques similaires. Elles ne constituent pas une interface fragilisée qui détériorerait les performances des structures auxquelles participeront les corps composites 12A, 12B.

Dans un premier mode de réalisation, au moins une feuille 22A, 22B est constituée d'une feuille de papier. Le papier présente une masse surfacique inférieure à 80 g/m². Il est par exemple constitué de fibres végétales, minérales, animales ou synthétiques fabriquées ou d'un mélange de ces fibres par dépôt et compression de fibres sur un dispositif de formation appropriée.

Dans le cas du papier, la mouillabilité est avantageusement contrôlée par la tension de surface résultant du type de fibres utilisées. La tension de surface est avantageusement inférieure à 60 dynes/cm, plus particulièrement comprise entre 40 dynes/cm et 60 dynes/cm.

La mouillabilité du papier peut être caractérisée par un test couramment pratiqué dans l'industrie papetière selon la norme ISO 535. Ce test consiste à déterminer la masse d'eau absorbée par unité de surface du papier, donnée par un indice COBB 60.

La mouillabilité de la première feuille et/ou de la deuxième feuille, mesurée par son indice COBB 60 déterminé selon la norme ISO 535, est avantageusement comprise entre 50% et 100%, avantageusement entre 80% et 100% de la masse surfacique de ladite feuille.

Un type de papier réalisé à partir de fibres cellulosiques et convenant pour l'invention est commercialisé sous la marque Alios® par la société Gascogne Paper. Ce type de papier est proposé avec des masses surfaciques variant de 28 g/m² à 70 g/m²

Dans un autre mode de réalisation, au moins une feuille 22A, 22B est réalisée à base d'un voile de fibres liées mécaniquement ou par un liant. Au moins une feuille 22A, 22B est réalisée notamment à base d'un voile de fibres céramiques telles que des fibres de verre.

Ce voile présente une masse surfacique inférieure à 100 g/m², et notamment comprise entre 70 g/m² et 90 g/m².

Il est par exemple formé à partir de mèches de filaments de céramique coupées ou continues, auquel cas le gain sur les caractéristiques mécaniques de la structure sandwich est significativement amélioré (par un effet d'anisotropie). Lorsque les filaments sont coupés, ils présentent une longueur comprise entre 50 mm et 250 mm.

Les filaments sont liés entre eux par une résine, par exemple une résine acrylique ou aminoplaste, appliquée notamment par aspersion. Alternativement les filaments peuvent être liés par un procédé mécanique tels la couture ou le tissage.

Le pourcentage massique de résine dans le voile est généralement inférieur à 30%, et est notamment compris entre 5% et 30% par rapport à la masse totale de la résine et des filaments. Les filaments sont tous situés dans un même plan si bien que ce voile pourra également participer au renfort du composite, au même titre que les fibres présentes dans le mat.

Le voile présente une pluralité d'ouvertures traversantes qui lui confèrent une porosité. Cependant, le voile est apte à retenir le polymère fondu issu de la fusion des fibres thermofusibles. Le diamètre des filaments constituant le voile est inférieur à 30 microns et est notamment compris entre 10 microns et 15 microns.

L'épaisseur du voile est inférieure à 1 mm, et est notamment comprise entre 0,5 mm et 0,8 mm.

Dans le cas d'un voile de verre de ce type, la mouillabilité est avantageusement contrôlée par la porosité. La porosité est mesurée par sa résistance au passage de l'air (RPA). Ainsi ces voiles sont caractérisés par une RPA, mesurée selon la Norme ISO 9053, supérieure à 25 N.s/m³ plus particulièrement comprise entre 25 N.s/m³ et 100 N.s/m³.

Un exemple de voile pouvant être utilisé est commercialisé sous la marque déposée FORTEX® par la société JOHNS MANVILLE sous la référence SH80/1.

Dans encore un autre mode de réalisation, des non-tissés de type filé fondu (ou « spunbonded »), soufflé fondu (ou « melt blown ») ou même aiguilleté voie sèche pourront être utilisés. Les fibres constituant les non-tissés ont une température de fusion supérieure à celle du polymère utilisé pour la réalisation du mat 16. A titre d'exemple, un type de non tissé filé fondu convenant pour l'invention présente une masse surfacique de 150g/m² à base de fibres de 3,3 dtex et ayant une RPA supérieure à 200 N.s/m3.

Chaque feuille 22A, 22B est fixée sur une face 18, 20 de la nappe, avantageusement par imprégnation partielle du polymère thermofusible de la matrice polymère 26 dans la feuille 22A, 22B.

A cet effet, la matrice 26 pénètre dans la feuille 22A, 22B sur une épaisseur avantageusement supérieure à 50 % de l'épaisseur de la feuille 22A, 22B et notamment inférieure à 80 % de l'épaisseur de la feuille 22A, 22B.

Toutefois, du fait de la présence des feuilles 22A, 22B, la nappe centrale 16 est confinée entre les feuilles 22A, 22B.

Les feuilles 22A, 22B recouvrent avantageusement la totalité des faces 18, 20 de la nappe 16, notamment plus de 95% de l'étendue de chaque face 18, 20.

Dans le cas où la feuille 22A ou 22B est un voile de verre, elle forme avantageusement renfort du composite puisqu'elle est pénétrée par le polymère qui forme la matrice et ce d'autant plus que les fibres de verre seront longues. On peut même moduler le pourcentage de fibres thermoplastiques et de fibres de céramique présentes initialement dans le mat pour tenir compte de cet apport supplémentaire de fibres de renfort, de façon à moduler les propriétés mécaniques finales du composite. Ainsi des propriétés identiques sont obtenues en mettant en oeuvre un mat de plus faible poids grâce au renfort des feuilles 22A, 22B.

Le deuxième corps 12B est analogue au premier corps 12A. Il ne sera pas décrit plus en détail ici.

L'écarteur 14 est interposé entre les corps 12A, 12B. Sa masse volumique est par exemple comprise entre 10 kg/m³ et 500 kg/m³ et plus particulièrement entre 20 kg/m³ et 50 kg/m³

Avantageusement, l'écarteur 14 est réalisé à base d'une structure alvéolaire ou en nid d'abeille.

Ainsi, l'écarteur 14 présente une pluralité de parois 30 sensiblement perpendiculaires à un plan moyen de la pièce 10, les parois 30 délimitant des espaces centraux 32 de contour fermé formant les alvéoles. Ainsi, chaque espace central ou alvéole 32 débouche en regard de d'une feuille respective 22B d'un corps 12A, 12B.

Dans un mode de réalisation, les alvéoles 32 définissent des mailles polygonales, notamment hexagonales.

La dimension transversale maximale des mailles polygonales, prise parallèlement à un plan moyen P de la pièce, est supérieure à 5 mm, et est par exemple comprise entre 5 mm et 20 mm, notamment entre 8 mm et 10mm.

En variante, les mailles sont ondulées. Dans ce cas, l'amplitude des ondulations est comprise entre 5 et 15mm et le pas (distance entre deux crêtes d'ondulation) est compris entre 5 et 20mm, avantageusement 8 et 16 mm

L'écarteur 14 est avantageusement réalisé en un matériau léger, tel que du papier ou du carton.

La masse surfacique de l'écarteur 14 est faible. Cette masse est notamment inférieure à 2000 g/m², et est avantageusement comprise entre 50 g/m² et 1500 g/m².

De préférence, cette masse surfacique est inférieure à 1500 g/m² et est sensiblement comprise entre 400 g/m² et 1200 g/m².

Ainsi, la pièce 10 présente une légèreté adéquate, du fait de la faible densité de l'écarteur 14.

L'écarteur 14 présente avantageusement une épaisseur supérieure à 2 mm, et par exemple comprise entre 2 mm et 100 mm, notamment entre 5 mm et 30 mm.

La tranche des parois 30 délimite les faces opposées 31 A, 31 B de l'écarteur 14 sur lesquelles sont assemblés respectivement le premier corps 12A et le deuxième corps 12B.

Dans la pièce 10 représentée sur la figure 2, un liant 33 est utilisé pour fixer le premier corps 12A sur la première face 31A et le deuxième corps 12B sur la deuxième face 31 B. Ce liant est par exemple une colle, un film ou un autre matériau adhésif compatible avec la composition des corps 12A, 12B et de l'écarteur 14.

Dans l'exemple particulier de la figure 1, le liant 33 est un film couvrant sensiblement la surface intérieure du corps 12A, 12B.

Ce liant peut faire partie des familles époxy, acrylique, méthacrylate, polyuréthane ou acétate de polyvinyle, ou de la famille des colles aqueuses du type colle à bois, telles les colles amylacées ou à base d'ester de cellulose.

Dans une variante, l'écarteur 14 est formé par une mousse, telle qu'une mousse polyuréthane, polyoléfine, polyester ou polystyrène ou encore une mousse à base de déchets de mousse, ou par un matériau tel que du polystyrène expansé ou du liège ou du balsa, offrant une masse surfacique inférieure à celle du premier corps 12A et du deuxième corps 12B.

Par ailleurs l'écarteur 14 peut garder une structure en nid d'abeille mais d'une autre nature que le carton, par exemple en aluminium, en matière polymérique telle les polyoléfines ou les polyesters.

La feuille 22A ou 22B, particulièrement s'il s'agit d'un papier, constitue une interface avec l'écarteur 14, dans le cas où l'écarteur 14 est réalisé en carton, lui-même à base de fibres cellulosiques. Une colle de type colle à bois réalise une liaison optimale.

Lorsque l'écarteur 14 est réalisé dans un autre matériau, la cellulose s'avère compatible avec un grand nombre de type de colles différents aussi bien hydrophiles qu'hydrophobes.

La feuille 22A, 22B de papier apparaît ainsi, lorsqu'elle est convenablement mouillée par le polymère présent dans les nappes 16, comme une interface polyvalente dans ce type de structure sandwich.

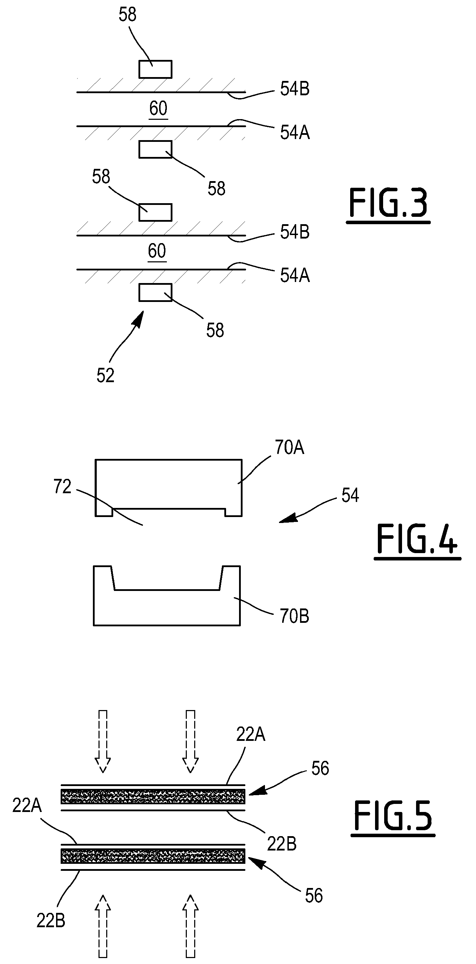

Un ensemble 50 de fabrication de la pièce 10, destinée à la mise en oeuvre d'un premier procédé selon l'invention est illustré par les figures 3 et 4.

Cet ensemble 50 comporte une unité 52 de chauffage et une unité 54 de moulage de chaque corps 12A, 12B, l'unité de moulage 54 étant avantageusement apte à réaliser l'assemblage des corps 12A, 12B sur l'écarteur 14, lorsque celui-ci est présent.

L'unité de chauffage 52 comporte au moins une paroi 54A, 54B de support d'une nappe de base 56 et des moyens 58 de chauffage de la nappe de base 56.

Dans l'exemple représenté sur la figure 3, l'unité 52 comprend au moins deux paires de paroi 54A, 54B en regard destinées à pré-former respectivement le premier corps 12A et le deuxième corps 12B.

Chaque paire comprend deux parois 54A, 54B en regard délimitant entre elles un espace intermédiaire 60. Avantageusement, les moyens de chauffage 58 sont disposés dans chaque paroi 54A, 54B pour chauffer la nappe 56 directement par contact.

Par ailleurs ces moyens de chauffage 58 sont montés sur une presse de faible puissance mais néanmoins capable d'exercer une force de 10 tonnes pour permettre la compression des corps composites 12A, 12B ainsi que le mouillage des feuilles 22A, 22B.

L'unité de moulage 54 est formée d'un moule 70 qui comporte un premier demi-moule creux 70A et un deuxième demi-moule creux 70B délimitant entre eux une cavité de moulage 72.

L'unité 54 comporte en outre des moyens de régulation de la température de chaque demi-moule 70A, 70B.

Un premier procédé de fabrication d'une pièce 10 selon l'invention va maintenant être décrit.

Le procédé de fabrication comprend une phase de pré-formation de chaque corps composite 12A, 12B, et avantageusement, une phase d'assemblage de chaque corps composite 12A, 12B sur l'écarteur 14.

La phase de pré-formation comprend une étape de fourniture d'une nappe de base 56 constituée d'un mélange de fibres de céramique et de fibres en matériau polymère thermofusible, puis une étape de chauffage et de compression de la nappe de base 56 pour faire fondre les fibres de matériau polymère et faire adhérer le polymère fondu aux fibres en céramique.

La pression exercée permet d'une part, le transfert des calories, et d'autre part, la compression des corps composites 12A, 12B jusqu'à la densité souhaitée.

A l'étape de fourniture, une nappe de base 56 formée de fibres de céramique et de fibres en matériau polymère thermofusible est fournie. Cette nappe de base 56 est découpée pour présenter un contour extérieur correspondant aux dimensions du corps 12A, 12B.

La nappe de base 56 a été avantageusement réalisée par un procédé par dispersion à l'air ou « airlay » qui permet de traiter aisément les mélanges de fibres de toutes natures. Elle peut être également réalisée par voie sèche classique (cardage suivi de nappage). Après sa constitution, la nappe est toujours renforcée par aiguilletage pour une manipulation plus aisée.

Dans la nappe de base 56, la proportion massique de fibres de polymère thermofusible est avantageusement comprise entre 30 % et 70 %, et la proportion massique de fibres de céramique est comprise entre 70% et 30%, comme on l'a vu plus haut.

La nappe de base 56 présente une tenue mécanique propre. Elle présente une masse volumique, par exemple comprise entre 80 kg/m³ et 150 kg/m³.

L'épaisseur de la nappe de base 56 est alors supérieure à 5 mm, et est par exemple comprise entre 7 mm et 12 mm.

Ensuite, chaque nappe de base 56 est recouverte d'au moins une feuille de matériau poreux 22A, 22B telle que décrite plus haut. Avantageusement, la nappe de base 56 est interposée entre deux feuilles 22A, 22B.

Les feuilles de matériau poreux 22A, 22B sont réalisées par exemple à base de papier, ou à base d'un voile de fibre, comme précisé plus haut. Une première feuille 22A de matériau poreux est disposée sur une première face de la nappe de base 56, et une deuxième feuille 22B de matériau poreux est disposée sur une deuxième face de la nappe 56.

Ensuite, lors de l'étape de chauffage, chaque nappe 56 munie des feuilles 22A, 22B sur ses faces opposées est introduite dans l'unité de chauffage 52, en appui contre une paroi 54A,54B.

Chaque nappe 56 est alors chauffée jusqu'à une température supérieure à la température de fusion du polymère constituant les fibres de polymère. Ce chauffage est mis en oeuvre pendant un temps de résidence supérieur à 10 secondes, et notamment compris entre 30 secondes et 45 secondes. Cette température est par exemple supérieure à 200 °C, et notamment comprise entre 250°C et 270°C.

Chaque nappe 56 est également comprimée jusqu'à la densité requise, c'est-à-dire entre 500 kg/m³ et 1500 kg/m³. Ainsi, lorsque les corps 12A, 12B sont fabriqués dans l'unité de chauffage 52, une compression est exercée sur la nappe 56 entre les parois 54A, 54B pour diminuer l'épaisseur de la nappe 56. Cette diminution est par exemple de l'ordre d'un rapport cinq, avantageusement d'un rapport dix. Ainsi, lorsque la nappe de base 56 présente initialement une épaisseur comprise entre 12 mm et 7 mm, elle comprend ultérieurement entre les parois 54A et 54B de l'unité de chauffage une épaisseur comprise entre 2 mm et 0,5 mm ce qui correspond approximativement à la densité finale requise pour les corps composites.

La pression exercée est relativement faible. Elle est de l'ordre de 6 bars ce qui est susceptible d'être produit par une presse de 10 tonnes. Les presses associées aux moules ont des capacités bien supérieures de l'ordre de 100 à 200 tonnes.

Le temps de résidence dans l'unité de chauffage 52 permet de chauffer les fibres thermofusibles jusqu'à une température supérieure à leur température de fusion. Le polymère des fibres est alors au moins en partie sous forme liquide et imprègne les fibres de céramique. Les feuilles 22A et 22B évitent que le polymère de faible viscosité n'adhère aux parois 54A, 54B.

A cette étape de « pré-formation » de la nappe 16 ou de « pré-formation » du corps composite 12A, 12B, on parlera donc de la nappe pré-formée 16 ou du corps composite pré-formé 12A, 12B. En effet, le corps composite en tant que tel n'est pas réellement constitué, car le polymère qui est encore en fusion ne constitue pas à proprement parler la matrice d'un corps composite.

Ce produit intermédiaire est néanmoins manipulable, grâce justement à la présence des feuilles 22A, 22B, et peut être aisément extrait de l'unité de chauffage.

Il convient de noter qu'une fois retiré de l'unité de chauffage, du fait de la résilience des fibres de céramique et du fait que la matrice n'est pas constituée, la nappe pré-formée 16 peut reprendre de l'épaisseur. Le corps composite pré-formé 12A, 12B présente donc une densité s'approchant de la densité finale du corps composite 12A, 12B. La différence de densité entre le corps composite pré-formé 12A, 12B et le corps composite 12A, 12B final est ainsi comprise entre 50% et 100%.

La tension de surface du polymère fondu est par exemple comprise entre 20 dynes/cm et 40 dynes/cm pour assurer un mouillage efficace des fibres de céramique 24.

D'une manière surprenante, les feuilles 22A, 22B confinent le polymère sous forme liquide et les fibres de céramique 24 et empêchent le polymère fondu ou les fibres de céramique 24, d'entrer en contact avec les parois 54A, 54B du moule.

Dans le cas où les feuilles 22A, 22B sont en papier à base de fibres cellulosiques, les fibres de bois du papier conservent leur intégrité, compte tenu du temps de résidence relativement court (moins de 50 secondes) et compte tenu de leur confinement entre les parois 54A, 54B. Par suite, aucun apport d'oxygène n'engendre d'inflammation du papier constituant les feuilles 22A, 22B.

Le polymère fondu imprègne partiellement l'épaisseur des feuilles 22A, 22B pour permettre, après refroidissement, de lier les feuilles 22A, 22B à la matrice 16 et d'assurer la continuité des contraintes.

Simultanément à cette étape de chauffage, l'écarteur 14 préalablement découpé aux dimensions requises est recouvert de liant sur ses deux faces par, par exemple des encolleuses à rouleaux.

Dans le mode de réalisation décrit sur la figure 3, chaque corps composite pré-formé 12A, 12B est introduit dans la cavité de moulage 72 entre deux demi-moules 70A, 70B en même temps que l'écarteur 14 qui lui est positionné entre les deux corps composites 12A, 12B préformés. Les parois 70A, 70B sont maintenues avantageusement à température constante de consigne souhaitée qui correspond avantageusement à la température de cristallisation du polymère présent dans les nappes 56.

Les parois 70A, 70B sont ensuite rapprochées l'une de l'autre pour à la fois comprimer le corps composite pré-formé 12A, 12B et assurer une pression entre les corps composites 12A, 12B et l'écarteur 14 Le corps composite pré-formé est maintenu au contact des parois 70A, 70B pendant un temps de résidence supérieur à 10 secondes, et notamment compris entre 30 secondes et 45 secondes ceci pour assurer une bonne cristallisation du polymère. La cavité 72 subsistant entre les parois 70A et 70B correspond alors à l'épaisseur souhaitée pour la pièce finale. En particulier le corps composite pré-formé est comprimé pour former un corps 12A, 12B final avec la densité définitive souhaitée, la matrice des corps composites 12A, 12B étant constituée par le polymère recristallisé et solidifié.

Du fait de la compression préalable lors de l'étape de chauffage qui a constituée le pré-formage des corps composites 12A, 12B, la pression exercée par les parois 70A, 70B sera relativement faible, ce qui préserve l'écarteur 14.

La présence de la feuille 22A, 22B entre l'écarteur et la nappe pré-formée 16 répartit la pression issue de l'écarteur sur la nappe pré-formée 16 notamment dans le cas où l'écarteur est un nid d'abeille et évite aux parois des alvéoles de pénétrer dans la nappe pré-formée 16.

Ainsi, la pièce selon l'invention 10 n'est pas soumise au « festonnage » qui peut causer des variations de densité dans le corps composite 12A, 12B conduisant à des performances moindres de l'ensemble de la structure sandwich.

La température des parois 70A, 70B transmise par conduction à l'ensemble des parties présentes dans le moule peut être mise à profit pour accélérer la prise de la colle entre l'écarteur 14 et la feuille 22A, 22B.

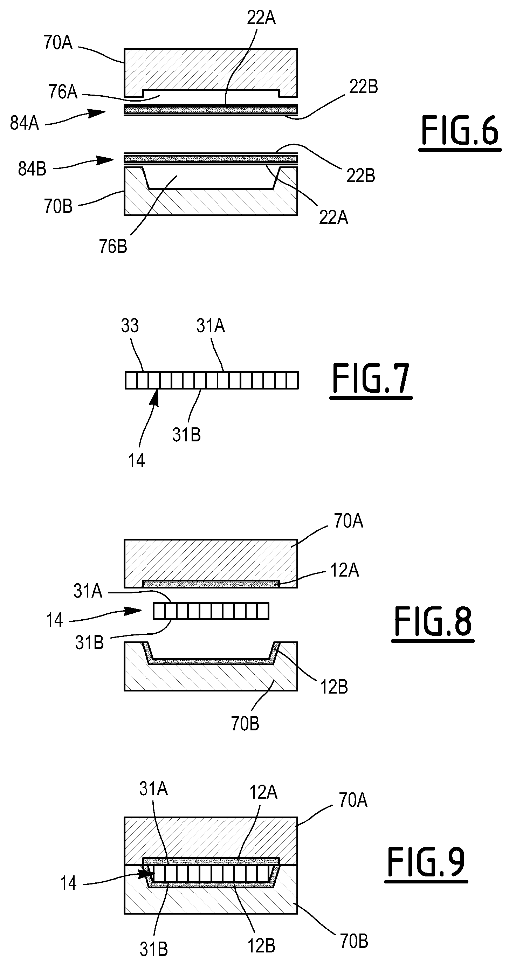

Puis, comme illustré par la figure 7, lorsque le moule 70 est partiellement fermé, avec insertion de l'écarteur 14 entre les nappes pré-formées 16, chaque nappe pré-formée 16 reçue entre deux feuilles 22A, 22B, adopte alors une forme conjuguée à celle du volume qui la reçoit.

Le polymère en durcissant forme la matrice de la nappe formée 16. Avantageusement, une recristallisation au moins partielle du polymère se produit pour engendrer de meilleures performances mécaniques. Chaque corps 12A, 12B est ainsi formé.

La pression exercée sur les feuilles 22A, 22B favorise le collage et la liaison de chaque corps composite 12A, 12B sur l'écarteur 14. Ceci est particulièrement le cas lorsque les feuilles 22A, 22B sont réalisées en papier de fibres cellulosiques, et que l'écarteur 14 est réalisé en carton. Dans ce cas, une simple colle à bois adaptée au collage des fibres cellulosiques peut être utilisée pour effectuer la liaison.

La viscosité et la tension de surface de la colle utilisée peuvent être choisies pour que la colle pénètre par capillarité dans l'épaisseur de la feuille 22A ou 22B sur l'épaisseur qui n'aura pas été pénétrée par le polymère. Ainsi, aux points de contact avec l'écarteur 14, les feuilles 22A ou 22B sont totalement imprégnées, soit par le polymère, soit par la colle. Cela assure une continuité entre les corps composites 12A, 12B et l'écarteur 14 sans qu'une zone de fragilité ne soit constituée.

Puis, la pièce 10 formée est extraite hors du moule 70.

Le procédé selon l'invention permet donc d'obtenir des pièces 10 particulièrement légères, et présentant d'excellentes propriétés mécaniques par rapport aux pièces réalisées par des procédés classiques.

Il convient de noter que les étapes de pré-formage des corps composites 12A, 12B, ainsi que l'étape d'imprégnation de la colle sur les faces de l'écarteur 14 ont sensiblement la même durée et s'effectuent pendant l'étape de moulage. La durée d'un cycle n'en est donc aucunement affectée est s'établit ainsi autour des 45 secondes ce qui particulièrement avantageux.

De plus, le procédé est simple à mettre en oeuvre puisque ne nécessitant qu'une régulation à température constante du moule et conduit à des pièces 10 qui sont faciles à manipuler. Le risque de blessures pour l'utilisateur ou pour l'opérateur du procédé est diminué en permettant le confinement total des fibres de céramique 24 et de la matrice en polymère 26 entre les feuilles 22A, 22B.

Avantageusement, le choix d'un polymère de PET avec un index de fluage élevé conduit à des propriétés mécaniques très avantageuses.

A la température supérieure à 85°C à laquelle les tests de comportements en flexion sont effectués, un polymère thermoplastique tel le PET, n'a dépassé que d'une dizaine de degrés Celsius sa température de transition vitreuse et reste en dessous de sa température de cristallisation.

Ses caractéristiques, particulièrement son module d'élasticité, ont très peu varié par rapport à ce qu'elles sont à température ambiante contrairement au polypropylène isotactique à partir duquel sont réalisées les fibres telles celles utilisées dans le cas du Sommold. Le polypropylène isotactique a en effet une température de transition vitreuse de l'ordre de -10°C et une température de cristallisation de l'ordre de 60°C.

Cet effet surprenant est particulièrement observable avec des fibres de polymère issues d'un polyester d'index de fluage (MFI) élevé. On sait que le module d'élasticité d'un polymère est corrélé à la masse moléculaire moyenne M qui caractérise la longueur moyenne des chaînes macromoléculaire qui le constituent. Plus cette masse moléculaire est élevée et plus le module sera élevé. La masse moléculaire M détermine également l'index de fluage. Plus la masse moléculaire M est faible et plus l'indice de fluage sera élevé (plus la viscosité à chaud sera faible).

De manière surprenante, même si l'indice de fluage est compris entre 30 g/10mn et 60 g/10mn ce qui correspond à des modules d'élasticité de l'ordre de 3000 à 5000 MPa seulement, les propriétés mécaniques du corps 12A, 12B sont améliorées.

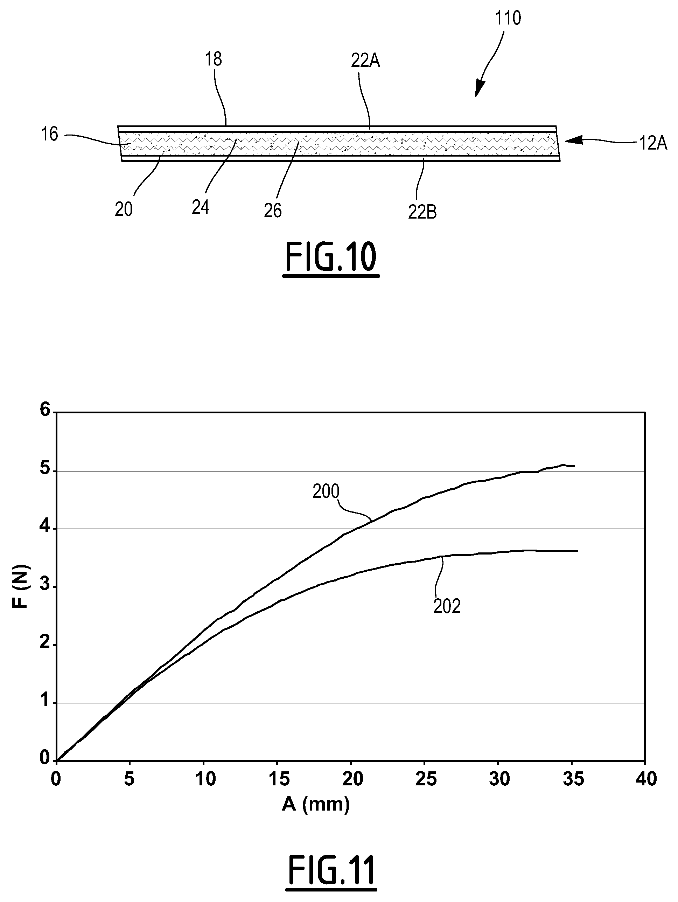

Ces résultats sont illustrés par les courbes de la Figure 11 où apparaissent illustrés les comportements de l'allongement A sous une force F donnée de flexion d'un corps composite tel 12A, 12B selon l'invention (courbe 200) en comparaison d'un corps composite de même poids et masse volumique réalisé à base de Sommold (courbe 202).

Sans être lié par aucune théorie, les inventeurs pensent que l'effet de fluage et de mouillage par le polymère en fusion des fibres de verre lors de la formation du corps composite tel 12A, 12B est prépondérant, particulièrement dans le cas du PET. L'obtention d'un mouillage et un enrobage poussé des fibres de verres par un polymère ayant des propriétés mécaniques intrinsèques, sous sa forme solide, inférieures, mais présentant une viscosité très basse (indice de fluage élevé) à chaud pendant le procédé, améliore les propriétés mécaniques par rapport à un enrobage qui resterait partiel avec un polymère de haut module mais de bas indice de fluage. Ceci est favorisé par la faible affinité chimique entre le verre et le polymère, qui nécessite un enrobage de bonne qualité.

La tension de surface d'un polymère décroit lorsque que l'indice de fluage augmente. Les fibres de verre ont une tension de surface critique élevée qui devrait les rendre très aisément mouillable par n'importe quel type de polymère. Cependant dans le cas d'un procédé dans lequel un mat est préparé par un procédé textile tel « l'airlay », l'ensimage présent sur les fibres de polymère se transfère sur les fibres de verre qui de fait acquièrent une tension de surface beaucoup plus basse. Une énergie de surface abaissée du polymère en fusion résultant d'un indice de fluage élevé s'avère donc un atout supplémentaire.

Un autre paramètre est la densité du corps composite selon l'invention obtenu après moulage. La densité maximale d'un tel composite constitué par exemple de 50% de fibres de verre (dont la densité est de l'ordre de 2,5 soit 2500 kg/m3) et de 50% de fibres de PET (de densité de l'ordre de 1,35 soit 1350 kg/m3) est théoriquement de l'ordre de 1,9. Grâce au procédé selon l'invention, il est possible de s'approcher de cette valeur sous la faible pression exercée par les plateaux chauffés en utilisant un polyester d'indice de fluage élevé, (même avec une pression faible de l'ordre de 6.10⁵ Pa).

Cependant l'utilisation d'un polymère avec un indice de fluage dans les gammes décrites plus haut, dans le cas d'un procédé de type « Sommold » présentant une très faible viscosité à chaud et une faible tension de surface n'est pas totalement satisfaisant. Le polymère « mouille » toutes les surfaces et y adhère assez fortement, même les surfaces de très basses énergies telles les surfaces siliconées si bien que le procédé de chauffe par contact est exclu.

La présence des feuilles 22A, 22B pallie cet effet négatif de l'indice de fluage en autorisant une chauffe par contact, tout en contribuant à renforcer les propriétés mécaniques des structures élaborées à partir des corps composites 12A, 12B et ceci sans en augmenter significativement le poids.

Dans une variante représentée en pointillés sur la figure 2, une couche de parement 90 peut être ajoutée sur l'un et/ou l'autre des corps 12A, 12B.

Dans ce cas, un adhésif, tel qu'une colle par exemple en polyéthylène peut être déposé sous forme de poudre sur la couche de parement 90 ou/et sur la feuille 22A, 22B. Puis, la couche de parement 90 est appliquée sur la feuille 22A, 22B pour adhérer à cette feuille 22A, 22B.

Dans une variante avantageuse, la couche de parement 90 est disposée dans le moule 70, avant l'introduction de chaque nappe couverte par les feuilles 22A, 22B. L'assemblage entre la couche de parement 90 et chaque corps 12A, 12B se produit lors de la formation de la pièce 10 dans le moule 70, la température du moule permettant la fusion de la poudre de polyéthylène qui a lieu vers 120°C

Dans une autre variante, un film (non représenté) tri-couches polyéthylène /polyamide / polyéthylène est ajouté dans le moule 70 entre une couche de parement textile 90 et la feuille 22A, 22B. Ce film joue le même rôle que la poudre de polyéthylène en assurant le collage du parement grâce à la fusion des constituants polyéthylène. Mais ici le film polyamide garde son intégrité et assure l'étanchéité vis-à-vis de l'eau. L'utilisation d'un tel film autorise l'emploi des feuilles en papier dans un environnement humide.

Dans une autre variante, la feuille 22A, 22B est formée d'un papier présentant une texture particulière ou un aspect choisi, tel qu'un papier glacé pour produire un effet esthétique.

Les papiers utilisés pourront avoir subit différents traitements les rendant par exemple hydrophobes sur l'une de leur face tels ceux décrit dans FR 2 925 910.

Dans une autre variante les feuilles 22A et 22B destinées à constituer un même corps composite tel 12A peuvent être de natures différentes. Par exemple la feuille 22A destinée à être collée contre l'écarteur 14 pourra être constituée de papier tandis que la feuille 22B destinée à recevoir un parement et/ou à constituer ainsi la face fonctionnelle, pourra être un voile de verre, ce qui limitera les problèmes liés à l'éventuelle présence d'eau.

Dans ce dernier cas on comprend particulièrement bien que les feuilles 22A et 22B n'ont pas qu'un rôle d'aide au procédé (« processing aid ») permettant la réalisation du corps composites 12A, 12B par chauffe contact, mais participent à un accroissement des performances mécaniques de la pièce 10 grâce à la fois à un rôle d'interfaçage pour un collage optimal avec l'écarteur 14 ainsi qu'à un rôle de renfort intrinsèque des corps composites 12A, 12B.

D'une manière générale les quatre feuilles 22A, 22B présentes dans la structure d'une pièce 10 de matériau sandwich tel que décrit pourront être de natures différentes et/ou de masse surfaciques différentes pour répondre au mieux aux exigences structurelles, fonctionnelles ou esthétiques de la pièce visée.

L'utilisation des feuilles 22A, 22B peut être généralisée dans le cas de réalisation de matériaux composites avec tout type de polymères thermoplastiques.

En particulier, la matrice 16 peut être formée à l'aide de polymères polyoléfines ou de polyester thermoplastique de faibles performances tel les polyesters biosourcés (par exemple l'acide polylactique : PLA). La qualité de l'interface due à la présence des feuilles 22A, 22B permet de réaliser des composites de type sandwich de bonnes performances à température ambiante, particulièrement dans leur comportement à la flexion.

De plus, ce type de pièce 10 en matériau composite selon l'invention avec écarteur en carton est recyclable. En effet, après broyage les composantes cellulosiques issues du carton sont aisément dissociées par exemple par centrifugation. La partie correspondant aux feuilles 22A, 22B qui reste indissociable du composant polymère thermoplastique et qui ne représente d'ailleurs qu'un très faible pourcentage massique du recyclat (environ 2 à 5%) se comportera comme une charge.

Ce type de recyclat pourra être utilisé en particulier dans des applications de pièces composites du même type que celles décrites dans des pourcentages variables en fonction du niveau de performances requises.

Une deuxième pièce 110 selon l'invention est illustrée par la figure 10. La pièce 110 illustrée par la figure 10 est par exemple destinée à former une pièce intermédiaire dans la fabrication d'un ensemble d'équipement de véhicule automobile. Cette pièce intermédiaire 10 est constituée d'un corps composite 12A unique comprenant une nappe centrale composite 16 telle que décrite plus haut, sur laquelle sont assemblées une première feuille 22A et une deuxième feuille 22B, respectivement sur la première face 18 et la deuxième face 20 de la nappe. Le polymère de la matrice 26 liant les fibres céramiques 24 de la nappe centrale 16 entres elles pénètre partiellement dans chacune des feuilles 22A, 22B, tout en étant confiné entre les feuilles 22A, 22B, pour améliorer les propriétés mécaniques du corps 12A et favoriser la fixation des feuilles 22A, 22B sur la nappe 16.

De plus, les feuilles 22A, 22B restant poreuses car pénétrées partiellement par la matrice, elles constituent des sites privilégiés de fixation d'autres couches, telle qu'une couche de parement pouvant être imprégnée par un matériau liant, telle qu'une colle.

Pour réaliser une telle pièce 110 le procédé est le même que celui décrit pour l'obtention de structure sandwich 10, à la différence que le moule 70 est configuré avec une cavité de moulage 72 correspondant à l'épaisseur d'un seul corps composite 12 et que la préparation d'un écarteur 14 n'est pas nécessaire.

## Revendications

1. Procédé de fabrication d'une pièce (10, 110) d'équipement de véhicule automobile, comprenant les étapes suivantes :
- fourniture d'une nappe de base (56) comportant des fibres en céramique et des fibres de polymère thermofusible ;
- disposition d'une première feuille (22A) de matériau sur une première face (18) de la nappe de base (56) et d'une deuxième feuille (22B) de matériau sur une deuxième face (20) de la nappe de base (56) ;
- chauffage et compression de la nappe de base (56) et des feuilles (22A, 22B) de matériau entre deux parois de support (54A, 54B) pour faire fondre les fibres de polymère thermofusible et pour faire adhérer le polymère fondu aux fibres de céramique afin d'obtenir une nappe pré-formée ;
- confinement de la nappe pré-formée dans un moule sous pression pour constituer une nappe formée (16), le polymère de la nappe formée (16) étant avantageusement au moins en partie cristallisé,
**caractérisé en ce que** le matériau de la première feuille (22A) et le matériau de la deuxième feuille (22B) sont des matériaux poreux, chaque feuille (22A, 22B) de matériau poreux présentant une épaisseur inférieure à celle de la nappe formée (16), et
**en ce que**, lors de l'étape de chauffage, le matériau polymère fondu issu des fibres de polymère thermofusible imprègne partiellement les feuilles (22A, 22B) de matériau poreux, sans les traverser, lesdites feuilles confinant ainsi entre elles le matériau polymère fondu,
les feuilles (22A, 22B) de matériau poreux étant liées à la nappe formée (16) par imprégnation partielle du polymère thermofusible, après l'étape de constitution de la nappe formée (16), pour constituer un premier corps composite (12A, 110).

2. Procédé selon la revendication 1, **caractérisé en ce que** chaque feuille (22A, 22B) de matériau poreux présente une masse surfacique inférieure à 100 g/m², avantageusement inférieure à 85 g/m², notamment inférieure à 60 g/m².

3. Procédé selon l'une quelconque des revendications 1 ou 2, ce que l'une au moins de la première feuille (22A) de matériau poreux et de la deuxième feuille (22B) de matériau poreux est formée de papier ou d'un voile plan de fibres liées mécaniquement ou par une résine.

4. Procédé selon l'une quelconque des revendications précédentes, **caractérisé en ce que** la tension de surface de la première feuille (22A) et/ou de la deuxième feuille (22B) est inférieure à 60 dynes/cm, et est notamment comprise entre 40 dynes/cm et 60 dynes/cm.

5. Procédé selon l'une quelconque des revendications précédentes, **caractérisé en ce que** la résistance au passage de l'air de la première feuille (22A) et/ou de la deuxième feuille (22B) est supérieure à 25 N.s/m³ et est notamment comprise entre 25 N.s/m³ et 100 N.s/m³.

6. Procédé selon l'une quelconque des revendications précédentes, **caractérisé en ce que** la première feuille (22A) est réalisée à base de papier, la deuxième feuille (22B) étant réalisée à base d'un voile plan de fibres liées mécaniquement ou par une résine, avantageusement d'un voile de matériau céramique.

7. Procédé selon l'une quelconque des revendications précédentes, **caractérisé en ce que** les fibres de polymère thermofusible sont des fibres contenant du polyester, en particulier des fibres contenant du polyéthylène téréphtalate.

8. Procédé selon l'une quelconque des revendications précédentes, **caractérisé en ce qu'**après l'étape de chauffage, l'épaisseur maximale de pénétration du polymère fondu dans chaque feuille (22A, 22B) de matériau poreux est inférieure à 90 % de l'épaisseur de la feuille (22A, 22B) de matériau poreux et est avantageusement comprise entre 50 % et 90 % de l'épaisseur de la feuille.

9. Procédé selon l'une quelconque des revendications précédentes, **caractérisé en ce qu'**il comporte la réalisation d'un deuxième corps composite (12B), avantageusement par les mêmes étapes que celles utilisées pour réaliser le premier corps composite (12A),
le procédé comportant la fixation du premier corps composite (12A) et du deuxième corps composite (12B) sur deux faces opposées d'un écarteur intermédiaire (14), avantageusement un écarteur intermédiaire (14) en matière fibreuse.

10. Pièce (10 ; 110) d'équipement de véhicule automobile, **caractérisée en ce qu'**elle comporte au moins un corps composite (12A, 12B) comportant une nappe formée (16) de fibres de céramique (24) liées entre elles par une matrice (26) en polymère avantageusement au moins en partie cristallisé, obtenue à partir de fibres de polymère thermofusible, le corps composite (12A, 12B) comprenant une première feuille (22A) de matériau poreux disposé sur une première face de la nappe formée (16) et une deuxième feuille (22B) de matériau poreux disposée sur une deuxième face de la nappe formée (16), chaque feuille (22A, 22B) de matériau poreux présentant une épaisseur inférieure à celle de la nappe formée (16), la matrice (26) en matériau polymère étant confinée entre les feuilles (22A, 22B) de matériau poreux, chaque feuille (22A, 22B) de matériau poreux étant liée à la nappe formée (16).

11. Pièce (10 ; 110) selon la revendication 10, **caractérisée en ce que** chaque feuille (22A, 22B) de matériau poreux présente une masse surfacique inférieure à 100 g/m², avantageusement inférieure à 85 g/m², notamment inférieure à 60 g/m².

12. Pièce (10 ; 110) selon l'une quelconque des revendications 10 ou 11, **caractérisée en ce que** chaque feuille (22A, 22B) de matériau poreux est choisie parmi une feuille de papier, et un voile plan de fibres liées mécaniquement ou par une résine.

13. Pièce selon l'une quelconque des revendications 10 à 12, **caractérisé en ce que** le polymère thermofusible comporte un indice de fluage à 260°C supérieur à 20 g/10mn et avantageusement compris entre 30 g/10mn et 60 g/10mn.

14. Pièce (10 ; 110) selon l'une quelconque des revendications 10 à 13, **caractérisée en ce que** la matrice (26) obtenue à partir de fibres de polymère thermofusible contient du polyester, notamment du polyéthylène téréphtalate.

15. Pièce (10) selon l'une quelconque des revendications 10 à 14, **caractérisée en ce qu'**elle comporte un premier corps composite (12A) et un deuxième corps composite (12B), chaque corps composite (12A, 12B) comportant une nappe formée (16) comprenant des fibres de céramique (24) liées entre elles par une matrice (26) en matériau polymère avantageusement au moins en partie cristallisé, obtenue à partir de fibres de polymère thermofusible, chaque corps composite (12A, 12B) comprenant une première feuille (22A) de matériau poreux fixée sur une première face de la nappe formée (16) et une deuxième feuille (22B) de matériau poreux fixée sur une deuxième face de la nappe formée (16), chaque feuille (22A, 22B) de matériau poreux présentant une épaisseur inférieure à celle de la nappe formée (16), la matrice (26) en matériau polymère étant confinée entre les feuilles (22A, 22B) de matériau poreux, chaque feuille (22A, 22B) de matériau poreux étant liée à la nappe formée (16),
le premier corps composite (12A) et le deuxième corps composite (12B) étant fixés sur un écarteur (14), notamment un écarteur (14) en matériau fibreux tel qu'un écarteur en carton.

## Patentansprüche

1. Verfahren zum Herstellen eines Kraftfahrzeug-Ausrüstungsteils (10, 110), das die folgenden Schritte umfasst:
- Bereitstellen einer Basislage (56), die Keramikfasern und wärmeschmelzbare Polymerfasern enthält;
- Anordnen einer ersten Materialschicht (22A) auf einer ersten Fläche (18) der Basislage (56) und einer zweiten Materialschicht (22B) auf einer zweiten Fläche (20) der Basislage (56);
- Erwärmen und Komprimieren der Basislage (56) und der Materialschichten (22A, 22B) zwischen zwei Tragwänden (54A, 54B), um die wärmeschmelzbaren Polymerfasern zu schmelzen und um das geschmolzene Polymer an den Keramikfasern anhaften zu lassen, um eine vorgeformte Lage zu erhalten;
- Einschließen der vorgeformten Lage in einer Form unter Druck, um eine geformte Lage (16) zu bilden, wobei das Polymer der geformten Lage (16) vorteilhaft wenigstens teilweise kristallisiert ist,
**dadurch gekennzeichnet, dass** das Material der ersten Schicht (22A) und das Material der zweiten Schicht (22B) poröse Materialien sind, wobei jede Schicht (22A, 22B) aus porösem Material eine Dicke aufweist, die kleiner als jene der geformten Lage (16) ist, und
dass in dem Erwärmungsschritt das geschmolzene Polymermaterial, das von den wärmeschmelzbaren Polymerfasern stammt, die Schichten (22A, 22B) aus porösem Material teilweise imprägniert, ohne sie zu durchdringen, wobei die Schichten somit das geschmolzene Polymermaterial zwischen sich einschließen,
wobei die Schichten (22A, 22B) aus porösem Material mit der geformten Lage (16) durch teilweises Imprägnieren des wärmeschmelzbaren Polymers nach dem Schritt des Bildens der geformten Lage (16) verbunden werden, um einen ersten Verbundkörper (12A, 110) zu bilden.

2. Verfahren nach Anspruch 1, **dadurch gekennzeichnet, dass** jede Schicht (22A, 22B) aus porösem Material eine oberflächenbezogene Masse kleiner als 100 g/m², vorteilhaft kleiner als 85 g/m² und insbesondere kleiner als 60 g/m², aufweist.

3. Verfahren nach einem der Ansprüche 1 oder 2, **dadurch gekennzeichnet, dass** wenigstens die erste Schicht (22A) aus porösem Material und die zweite Schicht (22B) aus porösem Material aus Papier oder aus einer ebenen Abdeckung aus Fasern, die mechanisch oder durch ein Harz verbunden sind, gebildet ist.

4. Verfahren nach einem der vorhergehenden Ansprüche, **dadurch gekennzeichnet, dass** die Oberflächenspannung der ersten Schicht (22A) und/oder der zweiten Schicht (22B) kleiner als 60 Dyn/cm beträgt und insbesondere im Bereich von 40 Dyn/cm bis 60 Dyn/cm liegt.

5. Verfahren nach einem der vorhergehenden Ansprüche, **dadurch gekennzeichnet, dass** der Luftdurchlasswiderstand der ersten Schicht (22A) und/oder der zweiten Schicht (22B) größer als 25 Ns/m³ ist und insbesondere im Bereich von 25 Ns/m³ bis 100 Ns/m³ liegt.

6. Verfahren nach einem der vorhergehenden Ansprüche, **dadurch gekennzeichnet, dass** die erste Schicht (22A) auf Papierbasis verwirklicht ist und die zweite Schicht (22B) auf der Basis einer ebenen Abdeckung aus Fasern, die mechanisch oder durch ein Harz verbunden sind, vorteilhaft aus einer Abdeckung aus Keramikmaterial, verwirklicht ist.

7. Verfahren nach einem der vorhergehenden Ansprüche, **dadurch gekennzeichnet, dass** die wärmeschmelzbaren Polymerfasern Fasern sind, die Polyester enthalten, insbesondere Fasern, die Polyethylen-Terephthalat enthalten.

8. Verfahren nach einem der vorhergehenden Ansprüche, **dadurch gekennzeichnet, dass** nach dem Heizschritt die maximale Eindringdicke des geschmolzenen Polymers in jede Schicht (22A, 22B) aus porösem Material kleiner als 90 % der Dicke der Schicht (22A, 22B) aus porösem Material ist und vorteilhaft im Bereich von 50 % bis 90 % der Dicke der Schicht liegt.

9. Verfahren nach einem der vorhergehenden Ansprüche, **dadurch gekennzeichnet, dass** es die Verwirklichung eines zweiten Verbundkörpers (12B) vorteilhaft durch die gleichen Schritte wie jene, die verwendet werden, um den ersten Verbundkörper (12A) zu verwirklichen, umfasst,
wobei das Verfahren das Befestigen des ersten Verbundkörpers (12A) und des zweiten Verbundkörpers (12B) an zwei gegenüberliegenden Flächen eines Zwischenabstandshalters (14), vorteilhaft eines Zwischenabstandshalters (14) aus Faserstoff, umfasst.

10. Kraftfahrzeug-Ausrüstungsteil (10; 110), **dadurch gekennzeichnet, dass** es wenigstens einen Verbundkörper (12A, 12B) umfasst, der eine geformte Lage (16) aus Keramikfasern (24) enthält, die miteinander durch einen Polymergrundstoff (26) verbunden sind, der vorteilhaft wenigstens teilweise kristallisiert ist und anhand von wärmeschmelzbaren Polymerfasern erhalten wird, wobei der Verbundkörper (12A, 12B) eine erste Schicht (22A) aus porösem Material, die auf einer ersten Fläche der geformten Lage (16) angeordnet ist, und eine zweite Schicht (22B) aus porösem Material, die auf einer zweiten Fläche der geformten Lage (16) angeordnet ist, umfasst, wobei jede Schicht (22A, 22B) aus porösem Material eine Dicke besitzt, die kleiner ist als jene der geformten Lage (16), wobei der Grundstoff (26) aus Polymermaterial zwischen den Schichten (22A, 22B) aus porösem Material eingeschlossen ist, wobei jede Schicht (22A, 22B) aus porösem Material mit der geformten Lage (16) verbunden ist.

11. Teil (10; 110) nach Anspruch 10, **dadurch gekennzeichnet, dass** jede Schicht (22A, 22B) aus porösem Material eine oberflächenbezogene Masse aufweist, die kleiner als 100 g/m² ist, vorteilhaft kleiner als 85 g/m² ist und insbesondere kleiner als 60 g/m² ist.

12. Teil (10; 110) nach einem der Ansprüche 10 oder 11, **dadurch gekennzeichnet, dass** jede Schicht (22A, 22B) aus porösem Material aus einer Papierschicht und einer ebenen Abdeckung aus Fasern, die mechanisch oder durch ein Harz verbunden sind, gewählt ist.

13. Teil nach einem der Ansprüche 10 bis 12, **dadurch gekennzeichnet, dass** das wärmeschmelzbare Polymer einen Kriechindex bei 260 °C aufweist, der größer als 20 g/10 mn ist und vorteilhaft im Bereich von 30 g/10 mn bis 60 g/10 mn liegt.

14. Teil (10; 110) nach einem der Ansprüche 10 bis 13, **dadurch gekennzeichnet, dass** der Grundstoff (26), der aus wärmeschmelzbaren Polymerfasern erhalten wird, Polyester, insbesondere Polyethylen-Terephthalat, enthält.

15. Teil (10) nach einem der Ansprüche 10 bis 14, **dadurch gekennzeichnet, dass** es einen ersten Verbundkörper (12A) und einen zweiten Verbundkörper (12B) umfasst, wobei jeder Verbundkörper (12A, 12B) eine geformte Lage (16) umfasst, die Keramikfasern (24), die miteinander durch einen Grundstoff (26) aus Polymermaterial verbunden sind, der vorteilhaft wenigstens teilweise kristallisiert ist und aus wärmeschmelzbaren Polymerfasern erhalten wird, enthält, wobei jeder Verbundkörper (12A, 12B) eine erste Schicht (22A) aus porösem Material, die an einer ersten Fläche der geformten Lage (16) befestigt ist, und eine zweite Schicht (22B) aus porösem Material, die an einer zweiten Fläche der geformten Lage (16) befestigt ist, umfasst, wobei jede Schicht (22A, 22B) aus porösem Material eine Dicke besitzt, die kleiner ist als jene der geformten Lage (16), wobei der Grundstoff (26) aus Polymermaterial zwischen den Schichten (22A, 22B) aus porösem Material eingeschlossen ist, wobei jede Schicht (22A, 22B) aus porösem Material mit der geformten Lage (16) verbunden ist,
wobei der erste Verbundkörper (12A) und der zweite Verbundkörper (12B) an einem Abstandshalter (14) und insbesondere an einem Abstandshalter (14) aus fasrigem Material wie etwa an einem Kartonabstandshalter befestigt sind.

## Claims

1. A method for manufacturing an equipment part (10, 110) of an automotive vehicle comprising the following steps:
- providing a base layer (56) including ceramic fibers and heat fusible polymer fibers;
- arranging a first sheet (22A) of material on a first face (18) of the base layer (56) and of a second sheet (22B) of material on a second face (20) of the base layer (56)
- heating and compressing the base layer (56) and the sheets (22A, 22B) of material between two supporting walls (54A, 54B) for melting the hot melt polymer fibers and having the molten polymer adhere to the ceramic fibers in order to obtain a preformed layer;
- confining the preformed layer in a pressurized mold in order to make up a formed layer (16), the polymer of the formed layer (16) being advantageously at least partly crystallized,
**characterized in that** the material of the first sheet (22A) and the material of the second sheet (22B) are porous materials, each sheet (22A, 22B) of porous material having a thickness of less than that of the formed layer (16), and
**in that**, during the heating step, the molten polymer issued from the heat fusible polymer fibers partly impregnates the sheets (22A, 22B) of porous material without crossing them, said sheets thereby confining between them the molten polymer,
the sheets (22A, 22B) of porous material being bound to the formed layer (16) by partial impregnation of the heat fusible polymer, after the step for making up the formed layer (16), in order to form a first composite body (12A).

2. The method according to claim 1, **characterized in that** each sheet (22A, 22B) of porous material has a surface mass of less than 100 g/m², advantageously less than 85 g/m², in particular less than 60 g/m².

3. The method according to any of claims 1 or 2, **characterized in that** at least one of the first sheet (22A) of porous material and the second sheet (22B) of porous material is formed with paper or a planar web of fibers bound mechanically or by a resin.

4. The method according to any of the preceding claims, **characterized in that** the surface tension of the first sheet (22A) and /or of the second sheet (22A) and/or of the second sheet (22B) is less than 60 dynes/cm, and is in particular comprised between 40 dynes/cm and 60 dynes/cm.

5. The method according to any of the preceding claims, **characterized in that** the airflow resistance of the first sheet (22A) and/or of the second sheet (22B) is greater than 25 N.s/m³ and is in particular comprised between 25 N.s/m³ and 100 N.s/m³.

6. The method according to any of the preceding claims, **characterized in that** the first sheet (22A) is made based on paper, the second sheet (22B) being made on the basis of a planar web of fibers bound mechanically or by a resin, advantageously a web of ceramic material.

7. The method according to any of the preceding claims, **characterized in that** the heat fusible polymer fibers are fibers containing polyester, in particular fibers containing polyethylene terephthalate.

8. The method according to any of the preceding claims, **characterized in that** after the heating step, the maximum penetration thickness of the molten polymer in each sheet (22A, 22B) of porous material is less than 90% of the thickness of the sheet (22A, 22B) of porous material and is advantageously comprised between 50% and 90% of the thickness of the sheet.

9. The method according to any of the preceding claims, **characterized in that** it includes the making of a second composite body (12B), advantageously by the same steps as the ones used for producing the first composite body (12A),
the method including attachment of the first composite body (12A) and of the second composite body (12B) onto opposite faces of an intermediate spacer (14), advantageously an intermediate spacer (14) in fiber material.

10. An equipment part (10, 110) of an automotive vehicle, **characterized in that** it includes at least one composite body (12A, 12B) including a layer (16) formed with ceramic fibers (24) bound together by a polymeric matrix (26), advantageously at least partly crystallized, obtained from heat fusible polymer fibers, the composite body (12A, 12B) comprising a first sheet (22A) of porous material positioned on a first face of the formed layer (16), and a second sheet (22B) of porous material positioned on a second face of the formed layer (16), each sheet (22A, 22B) of porous material having a thickness of less than that of the formed layer (16), the polymeric matrix (26) being confined between the sheets (22A, 22B) of porous material, each sheet (22A, 22B) of porous material being bound to the formed layer (16).

11. A part (10; 110) according to claim 10, **characterized in that** each sheet (22A, 22B) of porous material has a surface mass of less than 100 g/m², advantageously less than 85 g/m², in particular less than 60 g/m².

12. The part (10; 110) according to any of claims 10 or 11, **characterized in that** each sheet (22A, 22B) of porous material is selected from a sheet of paper and a planar web of fibers bound mechanically or by a resin.

13. The part according to any of claims 10 to 12, **characterized in that** the heat fusible polymer has a melt flow index at 260°C of more than 20 g/10mins and advantageously comprised between 30 g/10mins and 60 g/10mins

14. The part (10; 110) according to any of claims 10 to 13, **characterized in that** the matrix (26) obtained from heat fusible polymer fibers contains polyester, in particular polyethylene terephthalate.

15. The part (10; 110) according to any of claims 10 to 14, **characterized in that** it includes a first composite body (12A) and a second composite body (12B), each composite body (12A, 12B) including a formed layer (16) comprising ceramic fibers (24) bound together by a polymeric matrix (26), advantageously at least partly crystallized, obtained from heat fusible polymer fibers, each composite body (12A, 12B) comprising a first sheet (22A) of porous material attached on a first face of the formed layer (16) and a second sheet (22B) of porous material attached on a second face of the formed layer (16), each sheet (22A, 22B) of porous material having a thickness of less than that of the formed layer (16), the polymeric matrix (26) being confined between the sheets (22A, 22B) of porous material, each sheet (22A, 22B) of porous material being bound to the formed layer (16),
the first composite body (12A) and the second composite body (12B) being attached on a spacer (14), in particular a spacer (14) in fiber material such as a cardboard spacer.
